# EUROPEAN PATENT SPECIFICATION

(11) **EP 1 544 502 B1**
(45) Date of publication and mention of the grant of the patent: **10.08.2011**
(21) Application number: 03029098.5
(22) Date of filing: 18.12.2003
(51) Int. Cl.: F16G 5/16

(54) **Drive belt**
Treibriemen
Courroie de transmission

(43) Date of publication of application: 22.06.2005
(73) Proprietor: ROBERT BOSCH GMBH, 70442 Stuttgart (DE)
(72) Inventor: Tran, Minh Duc, 5348 GC Oss (NL); Pennings, Pieter Antonius Sebastianus Maria, 4891 VD Rijsbergen (NL)

(56) References cited:
- EP-A- 0 626 526
- EP-A- 1 111 271
- EP-A- 1 221 561
- US-A- 4 526 559

## Description

The present invention relates to a drive belt for a transmission realising a continuously variable transmission ratio according to the preamble of claim 1.

Drive belts of the present type are generally known through their application in continuously variable transmissions and typically also from EP-A-1111271 in the name of Applicant. The belts comprise one or two tensile means, typically in the form of a set of nested continuous metal bands. Currently applied and tested continuous bands that are intended for belts with two separate tensile means have a transverse width ranging from 8 to 15 millimetres, a radial thickness ranging from of 0.10 to 0.30 millimetres and a longitudinal circumference length ranging from 210 to 700 millimetres. These ranges typify the automotive application of the drive belt. The known drive belt is adopted in the continuously variable transmission, where it runs between the frusto-conical sheaves of a pair of adjustable pulleys, whereby the pulley sheaves exert a clamping force on cross elements of the belt. This clamping force, on the one hand, enables torque transmission through friction between the pulley sheaves of the pulleys and the drive belt and, on the other hand, urges the cross elements radially outward with respect to the rotational axle of the pulleys. The actual radially outward movement of the cross elements is limited by the tensile means. The tensile means and the continuous bands thereof are thereby put under tension via a normal force between a radially outwardly oriented contact face of the cross elements and the innermost continuous band or bands as seen in radial direction of the set or sets of nested continuous bands, i.e. the tensile means. Hereby, torque transfer by the cross elements pushing each other from one pulley to the other without drive belt buckling is enabled.

The transmission ratio of the transmission is determined by the quotient of running radii of the drive belt between the sheaves of the respective pulleys and can be varied from a minimum transmission ratio, wherein the running radius of a drive belt at a drive pulley is maximal and that in a driven pulley is minimal -the so-called Overdrive ratio-, via a medium transmission ratio, wherein both said running radii are virtually equal, to a maximum transmission ratio, wherein the running radius in the drive pulley is minimal and that in the driven pulley is maximal -the so-called Low ratio- and vice versa.

Usually, at least the continuous bands of the belt are of metal to reliably cope with the relatively high torque levels that occur in automotive applications of the transmission. Usually also, the separate cross elements of the drive belt are of metal and are shaped and dimensioned essentially mutually conforming. Because of its nature of use, the known drive belt is during operation subjected to extreme contact, bending and tensile stresses that, for instance, vary in height with the amount of bending in its longitudinal direction, i.e. proportional to the inverse value of the running radius, as well as with the mechanical power transmitted by the transmission. For this reason, avoidance of breakage of a drive belt during the service life of the transmission or the vehicle wherein it is to be applied, e.g. because of fatiguing and/or wear, is a main point of consideration in drive belt design.

In the German patent DE-A-2643528 it was recognised that abrasive contact between a transversely oriented lateral side face of the continuous bands and the pulleys or the cross elements, more in particular a pillar part of said elements, is likely to results in excessive wear and early breakage of a continuous band. To avoid the said contact, the said contact face of cross elements, which is known as the element's saddle surface and which is intended for interaction with the innermost continuous band of a tensile means, is provided with a convex transverse curvature in a direction perpendicular to the longitudinal direction of the belt. This transverse curvature of the saddle surface of the cross elements is intended to obtain a tensile means tracking effect through which a desired mutual orientation of the tensile means and the and cross elements is maintained, at least promoted, during operation and the said abrasive contact is avoided to a large extend.

It appeared in practice that even in cases where the drive belt was constructed to incorporate this known feature early failure of the belt could sometimes still be observed. Analysis of this problem revealed that it was, at least in some cases, caused by a fatigue crack originating from near the lateral sides of the innermost continuous band. This implies that during operation this band is subjected to a transverse bending, i.e. bending of the band in a direction transverse to the longitudinal or circumference direction thereof, causing relatively high contact stresses to occur in particular near the lateral sides of the continuous band.

Over the years, several manners for reducing these contact stresses have been tried that predominantly related to optimising the transverse curvature of the saddle surface in this respect. For example, it is known from the Japanese patent publication JP 2002-168305, in conformity with long standing practice by Applicant, to increase the transverse curvature of the saddle surface from a central position thereon to the respective lateral sides thereof, either smoothly by providing it with an elliptical shape or by dividing the saddle surface into several sections defined by their respective radius of curvature. Typically, such shapes include a central section of the saddle surface being defined by a relatively large radius of curvature and a lateral side section included on either side of the central section being defined by a considerably smaller radius of curvature. Furthermore, it is known to provide transition surface parts of the element that link up with the saddle surface's lateral sides with a convex curvature of relatively large radius, albeit smaller than the radii of curvature defining the saddle surface itself. With these measures it is aimed to provide a solution for raising the service life of the belt, by preventing an adverse contact between the lateral sides of the innermost continuous band and any sharply curved edge part of the cross element, while maintaining the known tracking effect.

In the first mentioned European patent application EP-A-1111271 also a so-called anticlastic bending effect is taken into account. More in particular, it was recognised that a transverse curvature of the continuous band varies with an amount of bending in the longitudinal direction thereof, i.e. with the running radius thereof. According to this document the convex curvature of the saddle surface should be larger, i.e. its radius of curvature smaller, than that of the innermost continuous band at least where it is bent in the longitudinal direction at the said minimal running radius. Again it is aimed to lower the contact stresses between the cross elements and the innermost band, while maintaining the tracking effect.

According to the invention it was surprisingly found that, by the known efforts to reduce the said contact stresses, the total stress loading of the innermost band may in some cases even be adversely affected. It is, therefore, an object of the current invention to provide for an improvement in the load carrying capacity of the drive belt by lowering the total stress loading thereof, i.e. including not only the said contact stresses, but also bending stresses due to the longitudinal and the transverse bending thereof.

In accordance with the invention, such aim may be achieved by a drive belt according to the characterising portion of claim 1. With the claimed measures a preferred contact between the innermost band of the tensile means and the saddle surface of the cross elements is realised, wherein the total stress loading of in particular the innermost band is minimised. More in particular, by the measures of the radius of curvature of the saddle surface being essentially constant throughout its axial or transverse width and at least the first transition surface part forming a relatively sharp edge between the saddle surface and the concavely recessed part adjacent the pillar part, the axial width of the saddle surface is maximised and a separation in the radial direction between the saddle surface and the innermost band is minimised. These effects favourably lower the amount of transverse bending of the innermost band required during operation, as well as the transverse bending stress as a result therefrom.

According to the invention and in contrast with common practice such advantageous lowering of the transverse bending stress more than offsets any adverse contact stresses that may occur at or near a lateral side of the innermost band when it engages the respective transition surface part, even in the circumstance where the band is wider than the saddle surface. This latter contact is, moreover, relieved in accordance with the invention by the third and final measure that the saddle radius is designed to be smaller than a band radius of a transverse curvature of the innermost band irrespective of an amount of bending in the longitudinal direction thereof during operation in the transmission. By this final measure it is ensured that under all circumstances a contact pressure between the saddle surface and the innermost band is smallest near its lateral sides, i.e. where it may engage the transition surface parts.

The present invention relies, inter alia, on a detailed stress analysis of the contact between the cross elements and the innermost band of the tensile means. This analysis showed that when during operation tensile stress is applied to the tensile means in a longitudinally bent section thereof, the innermost band thereof is forced into contact with the saddle surface, whereby it at least partly assumes the shape of the saddle surface in the transverse direction. When the saddle radius is smaller than the radius of the innermost band when it is not subjected to the tensile stress, i.e. the band radius, the plane of contact between the innermost band and the saddle surface extends in the lateral direction from a central or mid position towards either lateral side thereof, whereby the contact pressure decreases from such mid position towards the lateral sides along the plane of contact. Hereby an amount of transverse bending of the innermost band before it engages the saddle surface is determined by a local separation in the radial direction there between. The stress analysis underlying the present invention showed that minimising such radial separation significantly reduces the stress loading of the innermost band due to the reduced amount of transverse bending thereof and, more importantly, that this effect more than offsets any negative, i.e. stress raising, effect of the relatively sharp edge formed by the said first transition surface part. According to the analysis underlying the invention, the stresses associated with a contact between a transition surface part of the cross element adjacent to the saddle surface and a lateral side of the innermost band remain relatively small, due to the local contact pressure also being relatively small, if such contact would occur at all within the current design given the design requirements claimed. After all, the latter includes that the band radius should be larger than saddle radius.

Still, the tensile means of the known drive belt is usually provided with bands that are wider than the transverse width of the saddle surface, such that the lateral sides of the innermost band may in principle engage a transitional part of the cross element on either side of the saddle surface. Therefore, the contact stress in the innermost band at the location of the first transition surface part is limited by the measure that a transverse width of the innermost band is less than 125% of the transverse width of the saddle surface, preferably less than 115%. Hereby the distance that the innermost band extends over such first transition surface part is limited. Such distance may be further limited by positioning a highest point on the saddle surface as seen in radial direction eccentric with respect transverse width of the saddle surface away from the said first transition surface part. This highest point works as the tracking centre for the above-mentioned tracking effect of the tensile means, thus urging the tensile means away from the first transition surface part of the cross element during operation.

Preferably, a radius of curvature of the first transition surface part is as small as possible such that the saddle surface may be as wide as possible. Hereby the smallest possible radius of curvature is normally determined by the particular manufacturing process of the cross elements. In case of the generally preferred process of blanking such minimum radius of curvature amounts to approximately 3 mm.

For the same reason and to the same effect, also a second transition surface part between the saddle surface and a predominantly transversely oriented side face of the cross element is preferably formed as a sharp edge in accordance with the invention.

It is remarked that neither the innermost band nor the saddle surface will normally be arc-shaped to perfection, however, in the context of the present invention both may be approximated relatively accurately by an imaginary arc having the respectively defined radius of curvature.

The invention will now further be explained by way of examples given in the accompanying drawing wherein:
figure 1 is a schematic representation of the transmission and the drive belt the present invention relates to,
figure 2 is a schematic representation of a cross section of a conventional drive
belt,
figure 3 shows an enlarged part of the cross section of figure 2, whereby the right-hand side of the figure shows a graph wherein the modelled bending stresses for the innermost band are shown,
figure 4 represents a drive belt design according to the invention, together with the effect thereof in a graph wherein the modelled bending stresses for the innermost band are shown,
figure 5 is a representation of the drive belt similar to figure 4 representing a non-desired condition for the innermost band, and wherein
figure 6 illustrates a further drive belt design according to the invention, together with the effect thereof in a graph wherein the modelled bending stresses for the innermost band are shown.

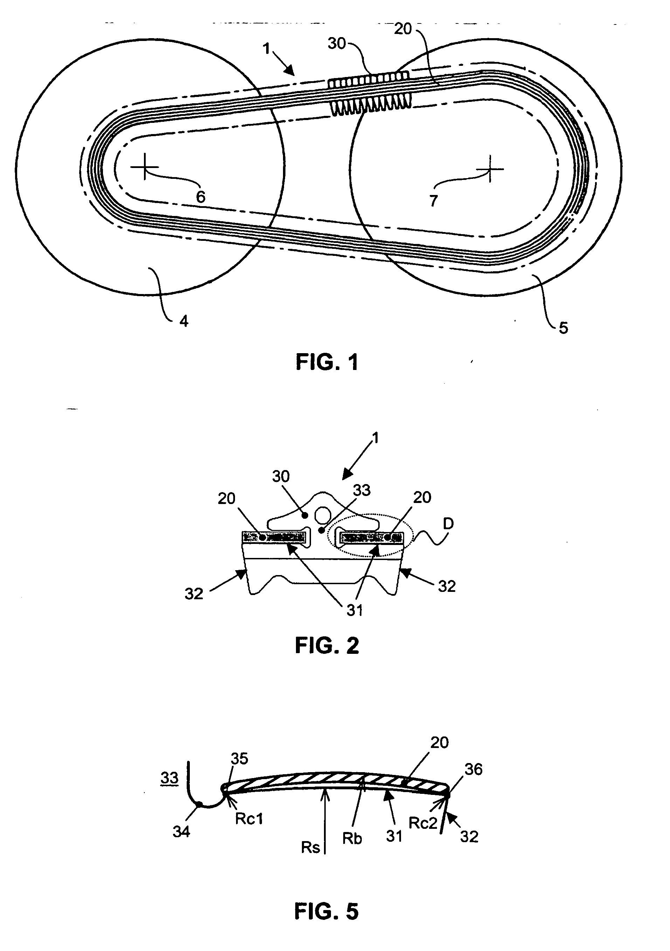

Figure 1 represents a schematic cross section of a continuously variable transmission, or CVT, with a drive belt 1 that comprises a tensile means 20 composed of a number of radially nested relatively thin continuous bands 21, such that it may be bent relatively easily in its longitudinal direction, and a number of cross elements 30 each having a contact face 31 for contacting the radially innermost band 21 of the tensile means 20, which contact face 31 is denoted the saddle surface 31 hereafter. The drive belt 1 is located around and between a set of pulleys 4, 5, each having a rotational axle 6, 7 respectively. To enable torque transfer between the pulleys 4, 5 by means of friction, the drive belt 1 is clamped between two sheaves of each of the pulleys 4, 5 by axially moving the sheaves towards each other, thereby exerting a clamping force on the drive belt 1. To take up this clamping force the cross elements 30 of the drive belt 1 are provided with predominantly transversely oriented side faces 32 that are mutually oriented at an angle, as shown in an cross-sectional view of the belt 1 represented by figure 2. With this configuration, the cross elements 30 are urged radially outwards by the clamping force, thereby exerting a normal force on the tensile means 20 that is put under a tensile stress as a consequence. At a driven rotation of a first pulley 4, the cross elements 30 are thrust along the tensile means 20 towards the respective second pulley 5, thereby providing a driving force to the latter. A so-called running radius of the drive belt 1 at each pulley 4, 5 is continuously variable, so that a continuously variable torque and speed transmission ratio may be achieved between the said pulleys 4, 5.

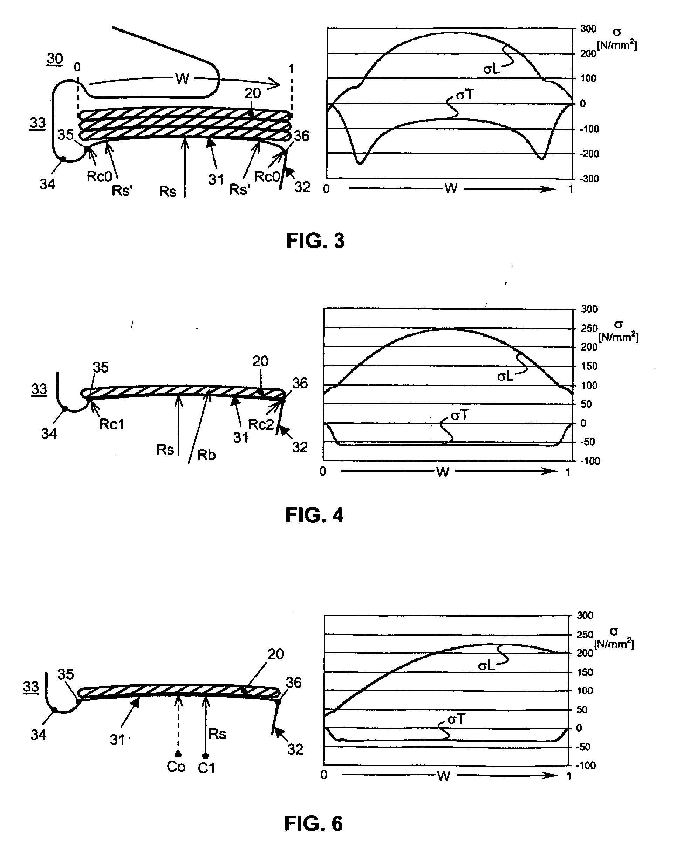

In figure 2 it is further shown that in this particular embodiment, the drive belt 1 is provided with two separate tensile means 20, each located on one respective side of a central part of the cross element 30 denoted the pillar part 33. Section "D" of figure 2 is indicated in more detail in figure 3 that shows an enlargement thereof.

In figure 3 it is shown that the saddle surface 31 is provided with a convex curvature in a direction transverse to the longitudinal direction of the drive belt 1 to effect tracking of the tensile means 20, i.e. to maintain or at least promote a desired mutual orientation thereof with respect to the saddle surface 31. In this set-up, the continuous band 21 during operation is centred on the contact face 31 and an abrasive contact between transversely oriented lateral sides of the bands 21 and the pulleys 4, 5 and the pillar part 33 of the cross elements 30 is prevented to a significant extend.

In this example the said transverse curvature of the saddle surface 31 is composed of three predominantly arc-shaped sections, being a central section of saddle radius Rs and two lateral side sections of somewhat smaller radius Rs' provided on either side of the central section, thus providing a more or less elliptical shape of the saddle surface 31 overall as seen in a longitudinally oriented cross section. It is, however, also known in the art to form the saddle surface 31 by a single generally arc-shaped transverse curvature that is defined by a constant radius Rs.

Two transition surface parts 35, 36 are provided that each link up with a respective lateral side section of the saddle surface 31. A first transition surface part 35 is located at the side of the saddle surface 31 closest to the pillar part 33 and forms a convex transition between the saddle surface 31 and a concavely recessed surface part 34. A second transition surface part 36 is located at the side of the saddle surface 31 closest to the respective transversely oriented side face 32 of the cross element 30 and forms a convex transition there between. In the known art, both these transition surface parts 35, 36 are defined by a relatively large radius of curvature Rc0 of, typically, 7 mm, so as to reduce and limit any adverse so-called Hertzian contact stress with the innermost band 21 of the tensile means 20 between these surface parts 35, 36.

In the stress analysis according to the present invention it has, however, appeared that in such known cross element design the tensile means 20 and in particular the innermost band 21 thereof is subjected to relatively high bending stresses σL, σT. In particular the transverse bending stress σT was found to be relatively high, because of the relatively large separation with the saddle surface and the large amount of transverse bending of the innermost band 21 that occurs in this known design in particular at or near the lateral sides thereof as a consequence.

On the right-hand side of figure 3, a stress graph is provided, wherein for such known cross element design these two bending stresses σL, σT have been calculated for a particular drive belt load configuration along the transverse width W of the innermost band 21 and starting from the lateral side thereof closest to the pillar part 33 towards the lateral side thereof closest to the said respective side face 32. This stress graph indeed indicates that the transverse bending stress σT significantly increases near the lateral sides of the band 21 and, in this example, reaches a maximum of about -210 N/mm². The negative sign of this stress indicates it to be a compressive stress. The longitudinal bending stress σL is distributed rather more evenly along the transverse width W of the band 21 and has a centrally located maximum of about 290 N/mm². It should be noted that this stress graph is to be treated as an example only and, therefore, that the numeric values disclosed thereby are primarily intended for comparison with those calculated for the cross element design in accordance with the invention.

In figure 4 a cross element design in accordance with the invention is shown, wherein both the first and the second transition surface parts 35, 36 are formed as a relatively sharp edge, in casu being arc-shaped with a respective radius of curvature Rc1, Rc2 of 3 mm and where between the saddle surface 31 extends in transverse direction forming an arc-shaped convex curvature provided with an essentially constant radius of curvature Rs of about 300 mm.

On the right-hand side of figure 4, a stress graph is provided wherein for such cross element design in accordance with the invention the two above-mentioned bending stresses σL, σT have been calculated for the same drive belt load configuration as formed the basis for figure 3. This stress graph indicates that that with the measures according to the invention the transverse bending stress σT may be lowered significantly, i.e. from the above-mentioned -210 N/mm² to about -60 N/mm². The calculations further indicate that also the longitudinal bending stress σL may lowered somewhat, i.e. from the above-mentioned 290 N/mm² to about 250 N/mm².

Figure 5, depicts an adverse condition of drive belt operation that is to be avoided in the present belt 1, preferably at all times, in which condition the band 21, at least when bent in the longitudinal direction between the sheaves of a pulley 4, 5 and in an unloaded state, would bear on the saddle surface 31 near its lateral sides as might occur in a known belt 1, in particular at a relatively large running radius thereof. During operation this condition could otherwise cause significant and undesirable -Herzian- contact stress at or near the said lateral sides. In particular in combination with the relatively sharp edge formed by the first and/or second transition surface part 35, 36 in accordance with the invention, these contact stresses could even be fatal and cause early breakage of the innermost band 21. Therefore, in combination with the measure according to the present invention of making the saddle surface 31 as wide as possible by making the transition surface part 35 or parts 35, 36 as sharp as possible, it is an absolute requirement that the saddle radius Rs is designed to be smaller than the band radius Rb, irrespective of an amount of bending in the longitudinal direction of the band 21 that may occur during operation in the transmission when it is located between the sheaves of a pulley 4, 5.

Figure 6, finally, relates to a further measure according to the invention, in which the centre C1 of the saddle radius Rs describing the saddle surface is located axially displaced from the midpoint of this surface 31 away form the concavely recessed surface part 34 as seen in the transverse direction. By this further measure in combination with the above-mentioned measures it is provided a highest point of the curvature of the saddle surface 31 is located eccentric with respect to the width of the saddle surface 31 away from the pillar part and towards the side face 32 of the cross element 30. This highest point works as the tracking centre for the above-mentioned tracking effect of the tensile means 20, thus urging the tensile means 20 away from the first transition surface part 35 of the cross element 30 during operation and limiting the so-called overhang parameter, i.e. a transverse distance that the innermost band 21 extends over and possibly even beyond the first transition surface part 35. Hereby it is promoted that any contact between the first transition surface part 35 and the innermost band 21 will occur only at or very near the transversely oriented sides faces of the latter. The accompanying contact stresses will then be advantageously small, as the local contact pressure will also be small, and a relatively sharp curving or small rounding radius Rc1 may be allowed for the said first the transition surface part 35 in accordance with the invention. It is remarked that such overhang parameter at the respective other side of the saddle surface 31, i.e. a transverse distance that the innermost band 21 extends over the second transition surface part 36, is effectively limited during operation by a respective pulley sheave onto which the cross element 30 bears through its respective side face 32.

Also in figure 6, the right-hand side indicates the bending stresses σL, σT associated with a such-shaped saddle surface 31 calculated for the same drive belt load configuration as in figures 3 and 4. It can be derived therefrom that although the longitudinal bending stress σL has assumed an asymmetric shape, it was possible to decrease the maximum level thereof even further to approximately 230 N/mm². Also the maximum level of the transverse bending stress σT was reduced even further to approximately -35 N/mm².

The invention, apart from what has been disclosed in the preceding, further relates to all details as provided by the following set of claims.

## Claims

1. Drive belt (1) to be incorporated between the sheaves of a pair of pulleys (4, 5) of a transmission for realising a continuously adjustable transmission ratio, the belt (1) comprising at least one continuous metal band (21) and a number of cross elements (30) arranged in association with the continuous band (21) freely movable in a longitudinal direction thereof, each cross element (30) having a contact face or saddle surface (31) for interacting with an inwardly oriented main face of the continuous band (21), which saddle surface (31) is provided with a transverse convex curvature of saddle radius (Rs) that is essentially constant throughout the axial, i.e. transverse width of the saddle surface (31) and that is designed to be smaller than a band radius (Rb) of a transverse curvature of the continuous band (21) irrespective of an amount of bending in the longitudinal direction of the band (21) that may occur during operation in the transmission when it is located between the sheaves (4, 5) of a pulley (1, 2), and which saddle surface (31) at a first lateral side adjacent to a pillar part (33) of the element (30) connects to a concavely recessed surface part (34) through a first convexly curved transition surface part (35), **characterised in that**
- a transverse width (W) of the continuous band (21) is larger than a transverse width of the saddle surface (31), but is smaller than 1.25 times the transverse width of the saddle surface (31), preferably less than 1.15 times the latter width, and **in that**
- the first transition surface part (35), which is defined inside an imaginary arc-shaped curvature having a radius of 5 mm, forms a sharp edge.

2. Drive belt (1) according to claim 1, **characterised in that** the first transition surface part (35) is shaped as a convex curvature having a radius of curvature (Rc1) that amounts to 1% or less of the saddle radius (Rs).

3. Drive belt (1) according to claim 1 or 2, **characterised in that** the saddle radius (Rs) has a value between 250 and 300 mm.

4. Drive belt (1) according to any of the preceding claims, **characterised in that** the cross element (30) is formed form sheet material by a blanking operation and that the first transition surface part (35) is shaped as a convex curvature having a radius of curvature (Rc1) of 3 mm.

5. Drive belt (1) according to any of the preceding claims, **characterised** the respective other lateral side of the saddle surface (31) connects to a predominantly transversely oriented side face (32) of the cross element (30) through a second convexly curved transition surface part (36) that forms a sharp edge, preferably being shaped as a convex curvature having a radius of curvature (Rc2) of 3mm.

6. Drive belt (1) according to any of the preceding claims, **characterised in that** a transverse position (C1) of a highest point on the saddle surface (31) as seen in radial direction is located eccentric with respect to the transverse width of the saddle surface (31) away from the said first transition surface part (35) and towards the said second transition surface part (36).

## Patentansprüche

1. Antriebsriemen (1) zum Einbau zwischen den Rillenscheiben eines Paars Rollen (4, 5) eines Getriebes zur Realisierung eines stufenlos verstellbaren Übersetzungsverhältnisses, wobei der Riemen (1) mindestens ein Endlosmetallband (21) und mehrere Querelemente (30) umfasst, die in Zuordnung zu dem Endlosband (21) frei beweglich in einer Längsrichtung davon angeordnet sind, wobei jedes Querelement (30) eine Kontaktfläche oder eine Sattelfläche (31) zum Zusammenwirken mit einer nach innen ausgerichteten Hauptfläche des Endlosbands (21) aufweist, wobei die Sattelfläche (31) mit einer konvexen Querkrümmung mit dem Sattelradius (Rs) versehen ist, der über die gesamte axiale, das heißt Querbreite der Sattelfläche (31) im Wesentlichen konstant ist und der so ausgelegt ist, dass er unabhängig von einem Ausmaß einer Biegung in Längsrichtung des Bands (21), die im Betrieb im Getriebe auftreten kann, wenn es zwischen den Rillenscheiben (4, 5) einer Riemenscheibe (1, 2) angeordnet ist, kleiner ist als ein Bandradius (Rb) einer Querkrümmung des Endlosbands (21), und wobei die Sattelfläche (31) an einer ersten lateralen Seite neben einem Säulenteil (33) des Elements (30) durch einen ersten konvex gekrümmten Übergangsflächenteil (35) mit einem konkav ausgesparten Flächenteil (34) verbunden ist, **dadurch gekennzeichnet, dass**
- eine Querbreite (W) des Endlosbands (21) größer ist als eine Querbreite der Sattelfläche (31), aber kleiner ist als das 1,25-Fache der Querbreite der Sattelfläche (31), vorzugsweise weniger als das 1,15-Fache der letzten Breite, und dass
- der erste Übergangsflächenteil (35), der in einer gedachten, bogenförmigen Krümmung mit einem Radius von 5 mm definiert ist, eine scharfe Kante bildet.

2. Antriebsriemen (1) nach Anspruch 1, **dadurch gekennzeichnet, dass** der erste Übergangsflächenteil (35) als eine konvexe Krümmung mit einem Krümmungsradius (Rc1) geformt ist, der 1% oder weniger des Sattelradius (Rs) beträgt.

3. Antriebsriemen (1) nach Anspruch 1 oder 2, **dadurch gekennzeichnet, dass** der Sattelradius (Rs) einen Wert zwischen 250 und 300 mm hat.

4. Antriebsriemen (1) nach einem der vorhergehenden Ansprüche, **dadurch gekennzeichnet, dass** das Querelement (30) durch einen Stanzvorgang aus einem Blechmaterial hergestellt ist und dass der erste Übergangsflächenteil (35) als eine konvexe Krümmung mit einem Krümmungsradius (Rc1) von 3 mm geformt ist.

5. Antriebsriemen (1) nach einem der vorhergehenden Ansprüche, **dadurch gekennzeichnet, dass** die jeweils andere laterale Seite der Sattelfläche (31) durch einen zweiten konvex gekrümmten Übergangsflächenteil (36), der eine scharfe Kante bildet und vorzugsweise als eine konvexe Krümmung mit einem Krümmungsradius (Rc2) von 3 mm geformt ist, mit einer in erster Linie quer ausgerichteten Seitenfläche (32) des Querelements (30) verbunden ist.

6. Antriebsriemen (1) nach einem der vorhergehenden Ansprüche, **dadurch gekennzeichnet, dass** eine Querposition (C1) einer höchsten Stelle auf der Sattelfläche (31) mit Blickrichtung in Radialrichtung exzentrisch bezüglich der Querbreite der Sattelfläche (31) von dem ersten Übergangsflächenteil (35) weg und zu dem zweiten Übergangsflächenteil (36) hin positioniert ist.

## Revendications

1. Courroie de transmission (1) devant être incorporée entre les rouets d'une paire de poulies (4, 5) d'une transmission pour réaliser un rapport de transmission ajustable en continu, la courroie (1) comprenant au moins une bande métallique continue (21) et un certain nombre d'éléments transversaux (30) agencés en association avec la bande continu (12) de manière librement mobile dans une direction longitudinale de celle-ci, chaque élément transversal (30) ayant une face de contact ou une surface en selle de cheval (31) destinée à coopérer avec une face principale de la bande continue (21) orientée vers l'intérieur, laquelle surface en selle de cheval (31) est pourvue d'une courbure convexe transversale de rayon de selle de cheval (Rs) qui est essentiellement constant sur toute la largeur axiale, c'est-à-dire transversale, de la surface en selle de cheval (21) et qui est conçu pour être inférieur à un rayon de bande (Rb) d'une courbure transversale de la bande continue (21) quelle que soit la quantité de fléchissement dans la direction longitudinale de la bande (21) qui peut se produire au cours du fonctionnement dans la transmission lorsqu'elle est située entre les rouets (4, 5) d'une poulie (1, 2), laquelle surface en selle de cheval (31), au niveau d'un premier côté latéral adjacent à une partie de pilier (33) de l'élément (30) est raccordée à une partie de surface (34) en retrait de manière concave par le biais d'une première partie de surface de transition (35) de courbure convexe, **caractérisée en ce que**
- une largeur transversale (W) de la bande continue (21) est supérieure à une largeur transversale de la surface en selle de cheval (31) mais est inférieure à 1,25 fois la largeur transversale de la surface en selle de cheval (31), de préférence inférieure à 1,15 fois la largeur de cette dernière, et **en ce que**
- la première partie de surface de transition (35), qui est définie à l'intérieur d'une courbure en forme d'arc imaginaire ayant un rayon de 5 mm, forme un bord vif.

2. Courroie de transmission (1) selon la revendication 1, **caractérisée en ce que** la première partie de surface de transition (35) a la forme d'une courbure convexe ayant un rayon de courbure (Rc1) qui représente 1% ou moins du rayon de selle de cheval (Rs).

3. Courroie de transmission (1) selon la revendication 1 ou 2, **caractérisée en ce que** le rayon de selle de cheval (Rs) a une valeur comprise entre 250 et 300 mm.

4. Courroie de transmission (1) selon l'une quelconque des revendications précédentes, **caractérisée en ce que** l'élément transversal (30) est formé en matériau en feuille par une opération d'estampage et **en ce que** la première partie de surface de transition (35) a la forme d'une courbure convexe ayant un rayon de courbure (Rc1) de 3 mm.

5. Courroie de transmission (1) selon l'une quelconque des revendications précédentes, **caractérisée en ce que** l'autre côté latéral respectif de la surface en selle de cheval (31) se raccorde à une face latérale orientée substantiellement transversalement (32) de l'élément transversal (30) par une deuxième partie de surface de transition de courbure convexe (36) qui forme un bord vif, de préférence ayant la forme d'une courbure convexe de rayon de courbure (Rc2) de 3 mm.

6. Courroie de transmission (1) selon l'une quelconque des revendications précédentes, **caractérisée en ce qu'**une position transversale (C1) d'un point le plus élevé de la surface en selle de cheval (31), vu dans la direction radiale, est situé de manière excentrée par rapport à la largeur transversale de la surface en selle de cheval (31) à l'écart de ladite première partie de surface de transition (35) et vers ladite deuxième partie de surface de transition (36).
